# EUROPEAN PATENT APPLICATION

(11) **EP 4 273 884 A1**
(43) Date of publication of application: **08.11.2023**
(21) Application number: 21915935.7
(22) Date of filing: 15.12.2021
(51) Int. Cl.: G21C 9/016

(54) **SYSTEM FOR CONFINING AND COOLING MELT FROM THE CORE OF A NUCLEAR REACTOR**

(30) Priority: 29.12.2020 RU 2020143779
(71) Applicant: Joint Stock Company "Atomenergoproekt", Moscow, 107996 (RU); Science and Innovations - Nuclear Industry Scientific Development, Private Enterprise, Moscow, 119017 (RU)
(72) Inventor: SIDOROV, Aleksandr Stalevich, Moscow 115612 (RU); SIDOROVA, Nadezhda Vasilievna, Moscow 115612 (RU); CHIKAN, Kristin Aleksandrovich, Moscow 111116 (RU); BADESHKO, Kseniya Konstantinovna, Moscow 400066 (RU)
(74) Representative: Osmans, Voldemars
(86) International application number: PCT/RU2021/000576
(87) International publication number: WO 2022/146185

(57) **Abstract**

The invention relates to the field of nuclear power engineering, and more particularly to systems which provide for the safety of nuclear power plants, and can be used in the event of accidents leading to the destruction of the pressure vessel and sealed containment structure of a reactor. A system for confining and cooling melt from the core of a nuclear reactor comprises a guide device, a cantilever truss, a filler for receiving and distributing melt, said filler being disposed in a housing having water supply valves mounted around its perimeter and having a flange with a thermal shield mounted thereon, a drum mounted on the flange of said housing and being configured in the form of a casing with reinforcing ribs mounted around its perimeter on the inner side, said reinforcing ribs bearing against a cover and a bottom, wherein said drum has tensioning elements connecting the drum, via a support flange welded thereto, to the flange of the housing, and spacing elements providing an adjustment gap between the drum and the flange of the housing. Provided in the drum are nozzles equipped with heat reflectors and cooling ribs and having water supply valves mounted therein, for increasing the reliability of the system for confining and cooling melt from the core of a nuclear reactor.

## Description

### Pertinent Art

The invention relates to the field of nuclear energy, in particular, to the systems ensuring safety of nuclear power plants (NPPs), and can be used in severe accidents resulting in destruction of the reactor pressure vessel and its containment.

Accidents with core meltdown that can take place in case of multiple failures of the core cooling systems pose the greatest radiation hazard.

During such accidents the core melt - corium - melts the core structures and the reactor pressure vessel and flows out beyond its boundaries, and as a consequence of the residual heat retained in it may disturb the NPP containment integrity - the last barrier on the routes for radioactive product releases to the environment.

In order to prevent this it is required to confine the core melt (corium) escaping from the reactor pressure vessel and provide its continuous cooling until its complete crystallization. This function is performed by a system for confining and cooling the melt from the core of the nuclear reactor which prevents damage to the NPP containment and thus protects the public and the environment against radiation exposure in case of any severe accidents at nuclear reactors.

Timely and ensured water supply to the multi-layered vessel for the melt cooling provided by installation of water supply valves in the upper section of the vessel intended for receiving and distributing melt is one of the most important factors for assurance of the reliable melt cooling and confining process in case of any severe accidents. In this case the key aspect is that water supply via the installed valves shall be arranged at a certain point in time upon achievement of certain (specific) conditions, particularly: early water supply can result in a steam explosion, and impossibility of water supply can result in overheating of the equipment inside the pressure vessel under the impact of radiant heat fluxes from the melt mirror which can finally cause the equipment collapsing into the pressure vessel, water ingress from the reactor shaft to the melt, mixing of water with melt resulting in steam explosions destroying the system for confining and cooling the melt and the containment with release of radioactive substances to the environment.

### Prior art

A system for confining and cooling the melt [1, 2, 3] from the core of a nuclear reactor comprising a guide plate installed under the reactor pressure vessel and resting upon a cantilever truss, a multi-layered vessel installed on embedded parts in the concrete vault foundation with a flange equipped with thermal protection, and a filler consisting of a set of cassettes installed onto each other, and a service platform installed inside the vessel between the filler and the guide plate is known.

This system has a low reliability due to the following drawbacks:
- in case of the reactor pressure vessel melt-through (destruction) by the melt, overheated melt starts to flow through the formed hole under the impact of residual pressure in the reactor pressure vessel; it is distributed non-axisymmetrically inside the multi-layered vessel volume and makes dynamic impact on the peripheral structures: the leak-tight connection zone between the multi-layered vessel and the cantilever truss, thermal protection of the multi-layered vessel flange, water supply valves located in the multi-layered vessel which causes their destruction and well as destruction of the multi-layered vessel flange and the inner surfaces of the cantilever truss washed by the melt which finally results in malfunctions of the system for confining and cooling the melt due to destruction of its components;
- in case of jet inflow of a large volume (for example, 10 to 15 m³) of overheated melt into the multi-layered vessel onto the filler a part of this melt moves backwards due to the reflective effect on the side of the filler - towards the peripheral structures, particularly towards the leak-tight connection zone between the multi-layered vessel and the cantilever truss, towards thermal protection of the multi-layered vessel flange and towards the multi-layered vessel, particularly to the area of the water supply valves which causes their damage and destruction (weld-up), and consequently disturbance of water supply into a multi-layered vessel for the melt cooling that can result in destruction of a system for confining and cooling the melt and release of radioactive substances to the environment;
- in case of the melt outflow to the multi-layered vessel into the filler the melt volume is increased due to the filler melting, and its level inside the multi-layered vessel also increases; in this case falling of any fragments of the core and the reactor pressure vessel bottom causes generation of melt splashes (waves) that make dynamic impacts on the peripheral equipment and the water supply valves installed in the multi-layered vessel resulting in their destruction (weld-up), and consequently disturbance of water supply into the multi-layered vessel for the melt cooling that can cause destruction of the system for confining and cooling the melt and release of radioactive substances to the external environment;
- aerosols are generated in the course of the melt outflow from the nuclear reactor pressure vessel and interaction of the melt with the filler; they move upwards from the hot zones and precipitate on the peripheral equipment and the water supply valves in the cold zones that results in their shielding with subsequent blocking of activation under the impact of thermal radiation from the melt mirror, and consequently in disturbance of water supply into the multi-layered vessel for the melt cooling that can cause destruction of the system for confining and cooling the melt and release of radioactive substances to the external environment.

### Disclosure of the invention

The technical result of the claimed invention is to enhance reliability of the system for confining and cooling the melt from the core of a nuclear reactor.

The tasks to be solved by the claimed invention include prevention of any destruction of the peripheral structures, equipment installed on the vessel flange, as well as provision of ensured cooling water supply onto the melt in case of any failure of the water supply valves installed inside the vessel.

The specified tasks are to be solved due to the fact that according to the invention the system for confining and cooling the melt from the core of a nuclear reactor comprising a guide device, a cantilever truss, a filler for receiving and distributing melt, located inside the vessel with water supply valves installed along its periphery and a flange equipped with thermal protection additionally comprises a drum installed on the vessel flange and arranged in the form of a shell with reinforcing ribs installed along its periphery on the inner side and resting on the cover and bottom, having tension elements connecting the drum with the vessel flange via a support flange welded to it, spacing elements that provide an adjustment gap between the drum and the vessel flange; in this case the drum has nozzles equipped with heat reflectors and cooling ribs where water supply valves are installed.

Presence of the drum installed on the vessel flange and arranged in the form of a shell with reinforcing ribs installed along its periphery on the inner side and resting on the cover and bottom, having tension elements connecting the drum with the vessel flange via a support flange welded to it, spacing elements that provide an adjustment gap between the drum and the vessel flange, and nozzles equipped with heat reflectors and ribs where water supply valves are installed in the system for confining and cooling the melt from the core a nuclear reactor is one of the essential features of the claimed invention. The drum with water supply valves installed in it enables to ensure recirculation of steam and gas mixture, steam and water mixture or water between the spaces inside and outside of the vessel in case of any failure of the water supply valves installed along the vessel periphery, and consequently to provide steam and gas, steam and water or water cooling of the melt mirror and the equipment located above the melt mirror (the cantilever truss and the guide device) due to recirculation of cooling media between the reactor shaft and the inner spaces both inside the vessel and above the melt mirror.

The reinforcing ribs installed on the inner side of the drum shell provide protection of the water supply valves of the drum against the impact of any missiles and azimuthal propagation of shock waves due to dispersion and reflection of shock waves and attenuation of their impact on the water supply valves of the vessel.

Heat reflectors and cooling ribs in their turn protect the water supply valves of the drum against beyond-design impact of thermal radiation from the melt mirror as well as against the impact of any missiles capable of disturbing operability of the above-mentioned water supply valves.

### Brief description of drawings

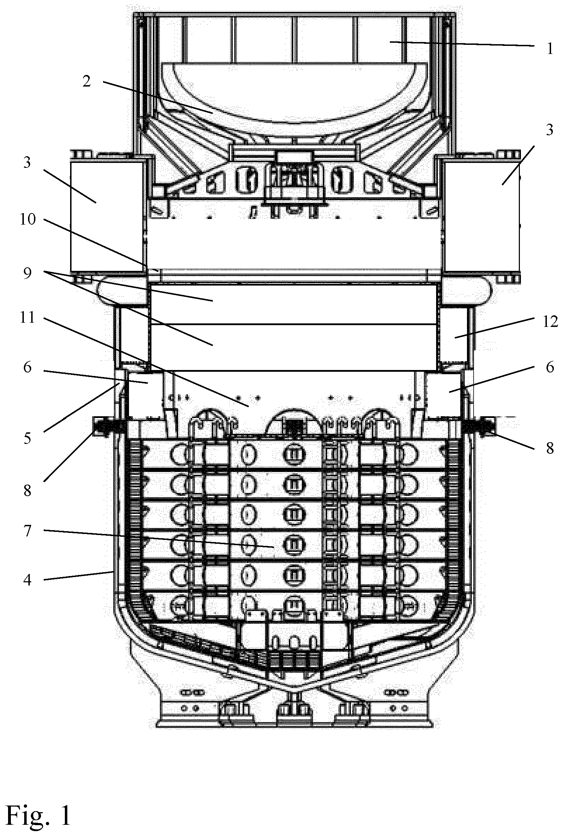

The system for confining and cooling the melt from the core of a nuclear reactor arranged in accordance with the claimed invention is shown in Fig. 1.

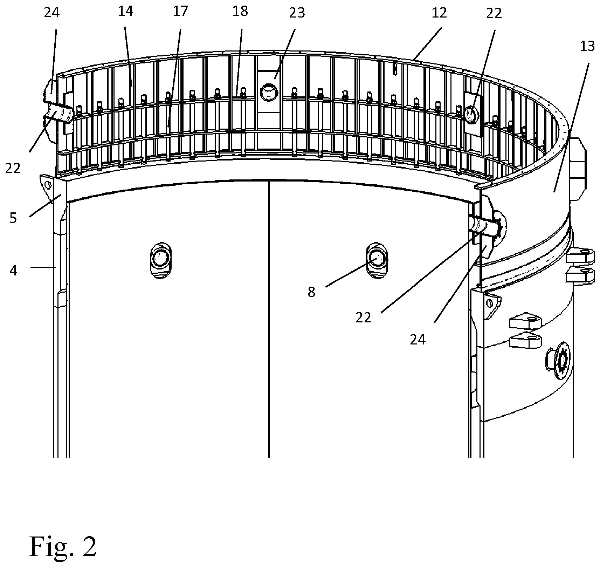

The drum installed on the vessel flange is shown in Fig. 2.

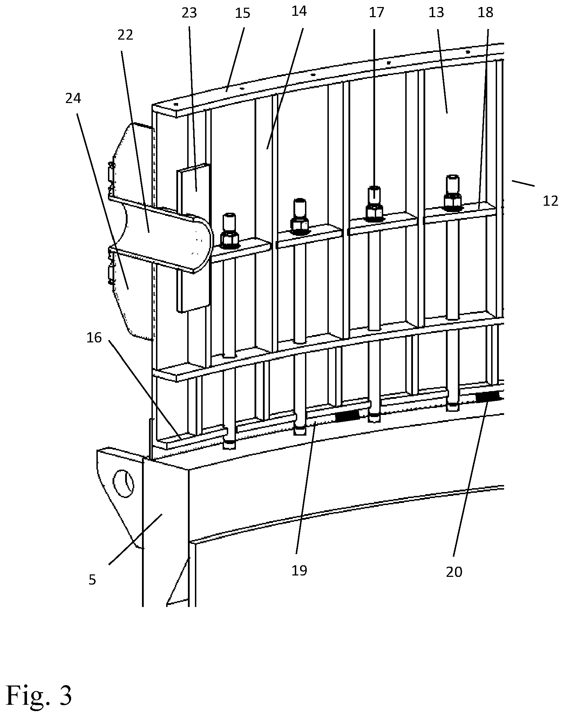

A fragment of the drum installed on the vessel flange is presented in Fig. 3.

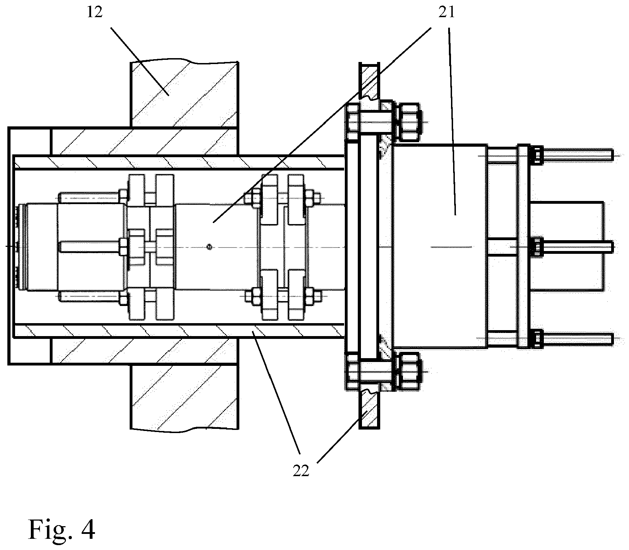

A water supply valve installed in the drum is shown in Fig. 4.

### Embodiments of the invention

As shown in Fig. 1-4, the system for confining and cooling the melt from the core of the nuclear reactor comprises a guide device (1) installed under the nuclear reactor pressure vessel (2) and resting on the cantilever truss (3). A vessel (4) installed in the foundation of the reactor shaft on embedded parts is arranged under the cantilever truss (3). The vessel (4) with a filler (7) is intended for receiving and distributing melt. A flange (5) equipped with thermal protection (6) is arranged in the upper section of the vessel (4). The filler (7) is installed inside the vessel (4). Water supply valves (8) are located in the area between the filler (7) and the flange (5) along the vessel (4) periphery. A drum (12) is installed on the flange (5) of the vessel (4).

As shown in Fig. 2-4, nozzles (10) with heat reflectors (11) and cooling ribs (21) are installed in the drum (12), water supply valves (9) are installed in the nozzles (10) and provide recirculation of steam and gas mixture, steam and water mixture or water between the spaces inside and outside the vessel (4).

The claimed system for confining and cooling the melt from the core of a nuclear reactor operates as follows.

Upon destruction of the nuclear reactor pressure vessel (2) the melt starts to flow onto the surface of the guide device (1) supported by the cantilever truss (3) under the impact of hydrostatic and residual pressure. The melt flowing down the guide device (1) enters the vessel (4) and contacts with the filler (7). In case of sectoral non-axisymmetric outflow of the melt, partial melting of thermal protections of the cantilever truss (3) and thermal protection (6) of the vessel (4) flange (5) takes place. In the course of their destruction these thermal protections reduce thermal impact of the melt on the protected equipment on the one hand, and reduce the temperature and chemical activity of the melt itself on the other hand.

Thermal protection (6) of the vessel (4) flange (5) provides protection of its upper thick-walled internal section against thermal impact on the part of the melt mirror from the moment of the melt inflow into the filler (7) and up to the end of the melt interaction with the filler (7), i.e. up to the starting moment of water cooling of the crust located on the melt surface. Thermal protection (6) of the vessel (4) flange (5) is installed in such a way so that to protect the inner surface of the vessel (4) above the melt level formed in the vessel (4) in the course of interaction with the filler (7), namely the upper section of the vessel (4) which is thicker than the cylindrical part of the vessel (4) providing for normal (without any critical heat flux in the pool boiling mode) heat transfer from the melt to water on the outer side of the vessel (4).

In the course of interaction between the melt and the filler (7) thermal protection (6) of the vessel (4) flange (5) is heated and partially destroyed, thus shielding thermal radiation from the melt mirror. The geometrical, thermal and physical characteristics of thermal protection (6) of the vessel (4) flange (5) are selected in such a way so that to provide shielding of the vessel (4) flange (5) on the side of the melt mirror under any conditions, thereby independence of the protective functions from completion time of the physical and chemical interaction processes between the melt and the filler (7) is ensured. Presence of thermal protection (6) of the vessel (4) flange (5) ensures performance of the protective functions prior to commencement of water supply onto the crust on the melt surface.

Protection of the water supply valves (8) of the vessel (4) is arranged in the passive way: thermal protection (6) of the vessel (4) flange (5) provides protection against any missiles in case of the reactor pressure vessel bottom (2) destruction, provides protection against any damage by the flowing melt and protection against falling of any fragments of thermal protections located above the melt mirror.

Ingress of metal and oxide components of the melt to the filler (7) located in the vessel (4) results in gradual melting of the filler (7) and formation of the free melt surface - the melt mirror - inside the vessel (4). In the course of completion of physical and chemical reactions between the metal and oxide components of the melt and the filler (7) the melt mirror temperature begins to increase due to redistribution of residual energy releases in the melt between physical and chemical reactions, heat transfer through the vessel (4), thermal radiation onto the equipment and convective heating of the gas mixture from the melt mirror.

The impact of thermal radiation on the water supply valves (8) of the vessel (4) and the water supply valves (9) of the drum (12) from the melt mirror is non-uniform: the impact of this radiation on the water supply valves (8) of the vessel (4) is much more intensive than on the water supply valves (9) of the drum (12) due to different location of the above-mentioned valves (8) and (9) according to their height in relation to the melt mirror position. Consequently, the water supply valves (8) of the vessel (4) will be heated faster than the water supply valves (9) of the drum (12) and will be activated for opening much earlier.

If the water supply valves (8) of the vessel (4) are not opened that is possible, for example, due to falling of one or several fragments of the reactor pressure vessel bottom (2) into the melt bath with generation of melt waves (splashes) welding up the above-mentioned water supply valves (8), thermal radiation from the melt mirror will continue to heat the water supply valves (9) of the drum (12) till the first one or two of them are activated.

As shown in Fig. 1-4, the drum (12) is installed on the vessel (4) flange (5). In terms of design the drum (12) is arranged in the form of a shell (13) with reinforcing ribs (14) installed along its periphery on the inner side and resting on the cover (15) and bottom (16). The drum (12) has tension elements (17) connecting the drum (12) with the vessel (4) flange (5) via the support flange (18) welded to it. Spacing elements (20) providing for an adjustment gap (19) between the drum (12) and the vessel (4) flange (5) are installed in the drum (12). Nozzles (10) are installed in the drum (12). Each nozzle (10) is equipped with heat reflectors (11) and cooling ribs (21). Water supply valves (9) providing for recirculation of steam and gas mixture, steam and water mixture or water between the spaces inside and outside the vessel (4) are located in the nozzles (10) of the drum (12).

The reinforcing ribs (14) of the drum (12) installed on the inner side of its shell (13) provide protection of the water supply valves (9) against the impact of any missiles and azimuthal propagation of shock waves due to dispersion and reflection of the shock waves.

The heat reflectors (11) and cooling ribs (21) protect the water supply valves (9) of the drum (12) against beyond-design impact of thermal radiation from the melt mirror as well as against the impact of any missiles capable of disturbing operability of the above-mentioned water supply valves (9).

The adjustment gap (19) enables to ensure accurate installation of the drum (12) on the vessel (4) flange (5).

In the course of the melt confining in the filler (7) integrity of certain components of the equipment of the system for confining and cooling the melt from the core of a nuclear reactor can be disturbed:
- thermal protections of the cantilever truss (3) can be damaged in sectors (destroyed or melted) as a result of non-axisymmetric melt inflow;
- thermal protection (6) of the vessel (4) flange (5) can be destroyed locally in the lower section by the melt splashes, and its upper section can be destroyed in sectors as a result of non-axisymmetric melt inflow.

These destructions are possible both at the initial stage of the melt confining and at the long-term confining stage. In case of such destructions radiant and convective heat fluxes from the melt mirror begin to make considerable impact on the equipment located above the vessel (4): on the guide device (1), on the cantilever truss (3) and on the drum (12). Under these conditions heating intensity for the drum (12) located between the cantilever truss (3) and the vessel (4) will depend significantly on intensity of the thermal radiation from the melt mirror and the state of the vessel (4) water supply valves (8): in case of any liquid melt ejection (splash) or wave-like heaving upon falling of any nuclear reactor pressure vessel bottom (2) fragments into the melt inside the vessel (4) the water supply valves (8) of the vessel (4) can be welded up with the liquid melt, and their flow passages can be blocked completely. Under these conditions total failure of the water supply valves (8) of the vessel (4) to supply cooling water onto the melt mirror is possible. Heating of thermal protection (6) of the vessel (4) flange (5), thermal protections of the cantilever truss (3) and the drum (12) will continue.

Heating of the drum (12) is accompanied with heating of the water supply valves (9) that are activated for opening upon reaching of the preset temperature. Activation of the water supply valves (9) of the drum (12) for opening provides for connection between the media located outside and inside the vessel (4) above the melt mirror, i.e. above the filler (7). When the water supply valves (9) of the drum (12) are opened, the steam and water mixture outside the vessel (4) begins to enter the inner space of the vessel (4) from the top onto the slag cap formed by dissolved filler (7) components. The process of steam and water cooling of the melt surface starts.

In order to prevent considerable distortion of the water supply valves (9) of the drum (12) due to thermal deformations of the nozzles (10) affected by thermal radiation from the melt mirror it is necessary to limit the direct impact of radiant heat fluxes. For this purpose the nozzles (10) inside the drum (12) are covered with the heat reflectors (11) for radiant heat fluxes. Cooling ribs (21) providing for intensification of heat removal from the nozzles (10) are welded to the nozzles (10) on the outer side of the drum (12).

Under the conditions when the level of cooling water on the side of the outer vessel (4) surface is slightly below the installation elevation of the water supply valves (8) of the vessel (4) hydrostatic supply of cooling water into the vessel (4) upon activation of the water supply valves (8) for opening is impossible. Taking into account the fact that a "steam and water hump" caused by steam generation with the height of 0.5 to 1.5 m is formed along the outer wall of the vessel (4) during intensive heat removal from the vessel (4) in the pool boiling mode supply of this steam and water mixture into the vessel (4) for the melt mirror cooling shall be ensured. However, in the absence of any hydrostatic lift the steam and water mixture will not enter via the open water supply valves (8) of the vessel (4) due to small pressure difference inside and outside the above-mentioned vessel (4). This small pressure difference is caused by higher temperature inside the vessel (4) in relation to the saturated steam pressure on the side of the outer vessel (4) surface. Recirculation of the steam and gas medium outside and inside the vessel (4) shall be provided in order to equalize these pressures. For this purpose the water supply valves (9) located above the water supply valves (8) of the vessel (4) are installed in the drum (12) in such a way so that the "steam and water hump" formed in the course of water boiling on the outer surface of the vessel (4) does not close the flow passage of the drum (12) water supply valves (9) and does not prevent equalization of pressure between the steam and gas media both outside and inside the vessel (4).

After activation of the water supply valves (8) of the vessel (4) no cooling of the melt mirror takes place as the water level is slightly below the location of the above-mentioned water supply valves (8). Further heating of the equipment located above the melt mirror, including the water supply valves (9) of the drum (12), by radiant heat fluxes takes place. Upon reaching of the activation temperature the water supply valves (9) of the drum (12) are opened providing for pressure equalization inside and outside the vessel (4). Vertical steam and gas draught occurs which provides circulation of the steam and gas mixture along the following route: the steam and water mixture enters the vessel (4) via the water supply valves (8) to the space above the melt mirror where it evaporates intensively, moves upwards and partially flows out via the open water supply valves (9) of the drum (12) to the space around the outer surface of the vessel (4) - to the space above it located around the outer surface of the drum (12) shell (13), and then to the containment, and partially flows along the cantilever truss (3) and enters the guide device (1) from which it can also finally flow out to the containment depending on the state of the reactor pressure vessel bottom (2) and the guide device (1). Therefore, sequential activation of the water supply valves (8) of the vessel (4) and the water supply valves (9) of the drum (12) provides for recirculation of the steam and gas mixture which cools the equipment of the system for confining and cooling the melt from the core of a nuclear reactor, located above the melt mirror, finally enabling to ensure long-term stable steam and gas, and then steam (mist) cooling of the melt mirror under the conditions of beyond-design equipment failures.

Thus, application of the drum with water supply valves installed in the nozzles equipped with heat reflectors and cooling ribs within the system for confining and cooling the melt from the core of the nuclear reactor enabled to enhance its reliability due to location of the water supply valves at different levels and assurance of the melt mirror cooling in case of the low cooling water level in the reactor shaft.

### Sources of information:

1. Russian Patent No. 2576517, IPC G21C 9/016, priority dated 16.12.2014;
2. Russian Patent No. 2576516, IPC G21C 9/016, priority dated 16.12.2014;
3. Russian Patent No. 2575878, IPC G21C 9/016, priority dated 16.12.2014.

## Claims

1. A system for confining and cooling the melt from the core of a nuclear reactor comprising a guide device, a cantilever truss, a filler for the receiving and distributing melt, located inside the vessel with water supply valves installed along its periphery, and thermal protection installed on the flange, **characterized in that** it additionally comprises a drum installed on the vessel flange and arranged in the form of a shell with reinforcing ribs installed along its periphery on the inner side and resting on the cover and bottom, having tension elements connecting the drum with the vessel flange via a support flange welded to it, spacing elements that provide an adjustment gap between the drum and the vessel flange; in this case the drum has nozzles equipped with heat reflectors and cooling ribs where water supply valves are installed.
